# EUROPÄISCHE PATENTSCHRIFT

(11) **EP 1 668 932 B1**
(45) Veröffentlichungstag und Bekanntmachung des Hinweises auf die Patenterteilung: **04.12.2013**
(21) Anmeldenummer: 04766576.5
(22) Anmeldetag: 23.08.2004
(51) Int. Cl.: H04M 3/436, H04M 3/42, H04W 4/20, H04W 8/18, H04W 76/02

(54) **Verfahren und Anordung zum Aufbauen einer Kommunikationsverbindung**
Method and apparatus for setting up a communication link
Procédé et dispositif pour établir une liaison de communication

(30) Priorität: 30.09.2003 DE 10345443
(43) Veröffentlichungstag der Anmeldung: 14.06.2006
(73) Patentinhaber: Siemens Aktiengesellschaft, 80333 München (DE)
(72) Erfinder: LUFT, Achim, 38120 Braunschweig (DE); SCHWAGMANN, Norbert, 38102 Braunschweig (DE); TRAUBERG, Markus, 38159 Velchede (DE); WULSTEN, Martin, 90425 Nürnberg (DE)
(86) Internationale Anmeldenummer: PCT/EP2004/051879
(87) Internationale Veröffentlichungsnummer: WO 2005/034538

(56) Entgegenhaltungen:
- EP-A- 1 289 241
- PATENT ABSTRACTS OF JAPAN Bd. 1996, Nr. 01, 31. Januar 1996 (1996-01-31) -& JP 07 245656 A (NIPPON TELEGR & TELEPH CORP <NTT>), 19. September 1995 (1995-09-19)

## Beschreibung

Die vorliegende Erfindung betrifft ein Verfahren zum Aufbauen einer Kommunikationsverbindung von einem ersten Telekommunikationsgerät über ein Telekommunikationsnetz zu einem zweiten Telekommunikationsgerät, und betrifft insbesondere ein Verfahren, bei dem bei der Rufsignalisierung bei dem zweiten Telekommunikationsgerät Daten, wie Bilder oder Töne des Benutzers des ersten Telekommunikationsgeräts angezeigt bzw. abgespielt werden.

Einer Kommunikation zwischen Personen mittels Telefonie, insbesondere der Mobiltelefonie, kommt in zunehmenden Maße Bedeutung zu. Dabei ist es für einen Telekommunikationsteilnehmer insbesondere beim Aufbauen einer Telefonverbindung wichtig, wenn er die Identität des Anrufers vor der Beantwortung bzw. der Entgegennahme des Rufs kennt. Hierzu kann der angerufene Telekommunikationsteilnehmer verschiedene Einrichtungen verwenden, um die Anruferidentifizierung, beispielsweise in der Form des Namens und der Telefonnummer des Anrufers anzuzeigen. Bei einer ersten Methode ist dabei in dem Telekommunikationsgerät des angerufenen Telekommunikationsteilnehmers eine Datenbank vorgesehen, in der Telefonnummern und dazugehörige Namen, aber auch ein Bild zu dem Namen gespeichert sind. Somit kann bei einem Anruf, bei dem gewöhnlicher Weise die Rufnummer des Anrufers übertragen wird, das Telekommunikationsgerät des Angerufenen den zugehörigen Namen sowie das Bild des Anrufers in der Datenbank ermitteln und neben der Telefonnummer und dem Namen auch das Bild des Anrufers anzeigen.

Als nachteilig bei einem Verfahren gemäß dieser ersten Methode ist, dass der Anrufer selbst keinen Einfluss auf das in dem Telekommunikationsgerät des Rufempfängers gespeicherte und angezeigte Bild hat. Die Einstellungen zum Anzeigen und die Auswahl des Bildes liegen hier beim Rufempfänger, wobei der Anrufer die Anzeige eines bestimmten Bildes weder erzwingen kann, noch das angezeigte Bild aktualisieren oder aber auch dem Rufempfänger ein aktuelles Bild zukommen lassen kann.

Um dieses Problem zu lösen, dass ein Anrufer Kontrolle über das bei dem Rufempfänger bei einer Rufsignalisierung angezeigte bzw. anzuzeigende Bild hat, besteht gemäß einer zweiten Methode auch die Möglichkeit, dass der Anrufer das Bild, das bei dem Rufempfänger angezeigt werden soll, von seinem Telekommunikationsgerät aus an ein die Kommunikationsverbindung (Telefonverbindung) vermittelndes Telekommunikationsnetz sendet, wobei das Telekommunikationsnetz das Bild mit der Rufsignalisierung dem Telekommunikationsgerät des Rufempfängers zukommen lässt. Auf diese Weise kann der Anrufer selbst das Bild wählen, das bei dem Rufempfänger erscheinen soll. Diese Möglichkeit ist insbesondere auch für Firmen von Interesse, die so bei einem Verbindungsaufbau ihr Logo bei dem angerufenen Teilnehmer bzw. dem Rufempfänger anzeigen lassen können. Als nachteilig bei diesem Verfahren gemäß der zweiten Methode stellt sich jedoch heraus, dass nun der Anrufer bei jedem Verbindungsaufbau ein Bild zuerst an ein Telekommunikationsnetz zur Weiterleitung an das Telekommunikationsgerät des Rufempfängers senden muss. Somit wird die Luftschnittstelle insbesondere bei einem Telekommunikationsgerät in der Ausführungsform eines Mobiltelefons und einem Telekommunikationsnetz als Mobilfunknetz sehr belastet. EP 1 289 241 stellt einen weiteren Stand der Technik dar.

Es ist somit die Aufgabe der vorliegenden Erfindung, eine Möglichkeit zum ressourcenschonenden Aufbau einer Kommunikationsverbindung zu schaffen, bei der dem Anrufer Kontrolle über die Rufsignalisierung gewährleistet wird.

Diese Aufgabe wird durch die unabhängigen Ansprüche 1 und 10 gelöst. Vorteilhafte Ausgestaltungen sind Gegenstand der Unteransprüche 2-9.

Kennzeichen für ein Verfahren zum Aufbauen einer Kommunikationsverbindung von einem ersten Telekommunikationsgerät über ein Telekommunikationsnetz zu einem zweiten Telekommunikationsgerät, ist es, dass eine Mehrzahl von Multimedia-Objekten, welche Bilder oder auch Töne bzw. Toninformationen aufweisen können, in dem Telekommunikationsnetzwerk gespeichert werden. So ist es möglich, dass ein Telekommunikationsteilnehmer, wie ein dem ersten Telekommunikationsgerät zugeordneter Telekommunikationsteilnehmer eine Mehrzahl verschiedener Multimedia-Objekte, insbesondere Bilder, zusammen mit einer jeweiligen Referenznummer in dem Telekommunikationsnetzwerk speichert. Eine derartige Speicherung bzw. ein derartiges Hochladen kann beispielsweise dadurch erfolgen, dass der erste Telekommunikationsteilnehmer die Bilder mittels seines ersten Telekommunikationsgeräts oder mittels eines anderen Geräts, wie beispielsweise einem mit dem Internet verbundenen Computer über das Internet im Telekommunikationsnetzwerk anordnet. Ferner ist es möglich, dass der Telekommunikationsteilnehmer seine Multimedia-Objekte mittels einer E-Mail an den Betreiber des Telekommunikationsnetzwerks sendet, damit dieser die Multimedia-Objekte im Telekommunikationsnetzwerk hinterlegt bzw. speichert. Das Hochladen kann dabei zu einem beliebigen Zeitpunkt geschehen.

Um nun eine Möglichkeit zu schaffen, bei der verschiedenen Rufempfängern jeweils ein bestimmtes Multimedia-Objekt, insbesondere Bild, eines Anrufers zur Identifikation des Anrufers übermittelt wird, wird eine Zuordnungsabbildung bzw. Zuordnungstabelle mit zumindest einem Datensatz festgelegt, wobei in einem jeweiligen Datensatz die Zuordnung von einem bestimmten Rufempfänger zu einer bestimmten Referenznummer eines Multimedia-Objekts angegeben ist. Das bedeutet, wenn ein Anrufer - im Beispiel der erste Kommunikationsteilnehmer - einen bestimmten Rufempfänger auswählt, um diesen zu rufen bzw. anzurufen, so kann diese Zuordnungsabbildung dabei behilflich sein, zu ermitteln, welches Multimedia-Objekt beim Rufempfänger angezeigt werden soll. Hat nun der Anrufer bzw. der erste Kommunikationsteilnehmer einen bestimmten Rufempfänger ausgewählt, so werden folgende Schritte durchgeführt. Es wird eine Verbindungsaufbauaufforderung von dem dem ersten Telekommunikationsteilnehmer zugeordneten ersten Telekommunikationsgerät an das Telekommunikationsnetzwerk gesendet, wobei diese Verbindungsaufbauaufforderung angibt, dass eine Kommunikationsverbindung, insbesondere Telefonverbindung, von dem ersten Telekommunikationsgerät zu dem einem ausgewählten Rufempfänger zugeordneten zweiten Telekommunikationsgerät aufgebaut werden soll. Ferner wird - wie bereits erwähnt - anhand der Zuordnungsabbildung ermittelt, welches Multimedia-Objekt bzw. welche diesem zugeordnete Referenznummer dem ausgewählten Rufempfänger zugewiesen ist. Wie es im Folgenden noch erläutert werden wird, können die beiden letzten Verfahrensschritte auch chronologisch vertauscht werden. Ist einmal die Referenznummer für ein Multimedia-Objekt, das dem ausgewählten Rufempfänger abgespielt werden soll, einmal ermittelt, so wird das dieser Referenznummer zugeordnete Multimedia-Objekt (welches, wie zuvor erwähnt, im Telekommunikationsnetzwerk gespeichert ist) von dem Telekommunikationsnetzwerk an das zweite Telekommunikationsgerät des Rufempfängers im Rahmen einer Rufsignalisierung übertragen und dort abgespielt. Insbesondere kann dabei ein Bild des Anrufers auf eine Anzeigeeinrichtung des zweiten Telekommunikationsgeräts angezeigt werden.

Ein derartiges Verfahren hat dabei mehrere Vorteile. Zum Einen hat der Anrufer Kontrolle darüber, welches Multimedia-Objekt beim Rufempfänger abgespielt bzw. angezeigt wird. Des Weiteren wird lediglich die Datenverbindung zwischen dem Telekommunikationsnetzwerk und dem zweiten Telekommunikationsgerät für den Datentransport multimedialer Inhalte belastet und nicht die Datenverbindung zwischen dem ersten Telekommunikationsgerät und dem Telekommunikationsnetzwerk. Außerdem findet auch eine automatische Handhabung bei der Auswahl von Multimedia-Objekten statt, die einem bestimmten Rufempfänger beim Verbindungsaufbau zugesendet werden. Wie bereits erwähnt, können die Schritte des Sendens einer Verbindungsaufbauaufforderung und des Ermittelns der Referenznummer für einen ausgewählten Rufempfänger zeitlich in unterschiedlichen Reihenfolgen durchgeführt werden.

Ferner liegt in dem ersten Telekommunikationsgerät die Zuordnungsabbildung beispielsweise in der Form einer Liste oder Tabelle vor, wobei nach dem Ermitteln der Referenznummer eines Multimedia-Objekts für einen ausgewählten Rufempfänger in dem ersten Telekommunikationsgerät von diesem die ermittelte Referenznummer an das Telekommunikationsnetz übertragen wird, das dann das der ermittelten Referenznummer zugeordnete Multimedia-Objekt an das zweite Telekommunikationsgerät überträgt. Das bedeutet, in diesem Fall findet bereits im ersten Telekommunikationsgerät die Ermittlung der Referenznummer statt, wobei die ermittelte Referenznummer dann schon ans Telekommunikationsnetzwerk übertragen wird.

Ferner ist die Zuordnungsabbildung beispielsweise in Form einer Liste bzw. Teilnehmerliste in dem Telekommunikationsnetz gespeichert, so dass der Schritt des Ermittelns der Referenznummer in dem Telekommunikationsnetzwerk durchgeführt wird. Im letzteren Fall wird somit auch weiter die Verbindung zwischen dem ersten Telekommunikationsgerät und dem Telekommunikationsnetz entlastet und es wird Rechenaufwand auf das Telekommunikationsnetz verlagert.

Um auch den Fall zu berücksichtigen, dass ein Verbindungsaufbau auch zu einem nicht in der Zuordnungsabbildung vorgesehenen Rufempfänger durchgeführt werden soll, wird ein bestimmtes einem Teilnehmer zugeordnetes Multimedia-Objekt als ein sogenanntes Standard-Multimedia-Objekte definiert, das auch für unbekannte Rufempfänger zu verwenden ist. Anders ausgedrückt kann der Schritt des Ermittelns derart ausgelegt sein, dass bei Vorliegen eines ausgewählten Rufempfängers, für den kein Datensatz in der Zuordnungsabbildung vorliegt, eine Referenznummer eines vorbestimmten Multimedia-Objekts als die ermittelte Referenznummer ausgegeben wird. Somit ist gewährleistet, dass jeder Rufempfänger ein ihm zugeordnetes Multimedia-Objekt beim Verbindungsaufbau zugesendet bekommt.

Gemäß der vorliegenden Erfindung ist in dem zweiten Telekommunikationsgerät ein Multimedia-Objekt mit einer entsprechenden Referenznummer des ersten Telekommunikationsteilnehmers gespeichert, wobei in diesem Fall von dem Telekommunikationsnetzwerk nur dann ein Multimedia-Objekt an das zweite Telekommunikationsgerät übertragen wird, wenn die Referenznummer des auf dem zweiten Telekommunikationsgerät gespeicherten Multimedia-Objekts nicht mit der Referenznummer des zu übertragenden Multimedia-Objekts übereinstimmt. Das bedeutet, es kann hierbei der Fall berücksichtigt werden, bei dem auf das zweite Telekommunikationsgerät bereits ein Multimedia-Objekt eines bestimmten Telekommunikationsteilnehmers (als Anrufer) gemäß einem oben beschriebenen Verfahren übertragen wurde und nun dieses Multimedia-Objekt, insbesondere Bild bereits auf dem zweiten Telekommunikationsgerät vorliegt. Soll nun eine erneuter Verbindungsaufbau von dem gleichen Anrufer zu dem zweiten Telekommunikationsgerät durchgeführt werden, so kann in diesem Fall eine erneute Übertragung des Multimedia-Objekts des Anrufers vom Telekommunikationsnetzwerk zu dem zweiten Telekommunikationsgerät dann unterbleiben, wenn auf dem zweiten Telekommunikationsgerät ein Multimedia-Objekt mit der zuvor ermittelten Referenznummer bereits vorliegt. Auf diese Weise kann dann die Datenverbindung zwischen dem Telekommunikationsnetzwerk und dem zweiten Telekommunikationsgerät entlastet werden. Eine Überprüfung, ob auf dem zweiten Telekommunikationsgerät das richtige Multimedia-Objekt (mit der richtigen Referenznummer) vorliegt, kann vor der Übertragung eines Multimedia-Objekts zunächst nur die ermittelte Referenznummer des zu übertragenden Multimedia-Objekts an das zweite Telekommunikationsgerät übermittelt werden. Nach einem Vergleich der übermittelten Referenznummer mit der Referenznummer des in dem zweiten Telekommunikationsgerät gespeicherten Multimedia-Objekts kann das zweite Telekommunikationsgerät dann eine Nachricht an das Telekommunikationsnetzwerk zurücksenden, welche angibt, entweder dass die Referenznummern übereinstimmen (so dass keine erneute Übertragung des Multimedia-Objekts zu dem zweiten Telekommunikationsgerät notwendig ist) oder dass keine Übereinstimmung bei den Referenznummern besteht, so dass das Telekommunikationsnetzwerk ein Multimedia-Objekt zum zweiten Telekommunikationsgerät übertragen soll.

Ferner ist einem Multimedia-Objekt eines Telekommunikationsteilnehmers, insbesondere des ersten Telekommunikationsteilnehmers, neben der Referenznummer ferner eine weitere Referenzinformation umfassend eine Speicherberechtigungsangabe zugewiesen, welche angibt, ob ein an das zweite Telekommunikationsgerät übertragene Multimedia-Objekt des ersten Telekommunikationsteilnehmers dort gespeichert werden darf oder nicht. Eine derartige Speicherberechtigungsangabe kann insbesondere bei der Übertragung von Multimedia-Objekten sinnvoll sein, welche Bilder mit Firmenlogos aufweisen, wobei in einem derartigen Fall die lokale Speicherung auf dem zweiten Telekommunikationsgerät verboten sein soll, um einem Missbrauch des Firmenlogos entgegenzuwirken.

Das erste und/oder das zweite Telekommunikationsgerät können beispielsweise als ein Mobilfunkgerät, ein Mobiltelefon oder als ein Computer mit Funkmodul ausgebildet sein. Außerdem ist es möglich, dass in dem Fall, bei dem das Telekommunikationsnetzwerk als ein öffentliches Festnetztelefon ausgebildet ist, das erste und/oder das zweite Telekommunikationsgerät als ein drahtgebundenes bzw. schnurgebundenes Telefon ausgebildet ist. Ferner ist es möglich, dass das Telekommunikationsnetzwerk als ein öffentliches Festtelefonnetzwerk oder aber als ein Mobilfunknetzwerk, das insbesondere nach dem GSM(Global System for Mobile Communication)-Standard oder dem UMTS(Universal Mobile Telecommunications System)-Standard arbeitet, ausgebildet ist. Dabei kann bei Ausbildung des Telekommunikationsnetzwerks als Mobilfunknetzwerk die Speicherung von Multimedia-Objekten und der Zuordnungsabbildung, oder aber auch das Verarbeiten von Signalen bzw. Nachrichten von den Telekommunikationsgeräten sowie das Übertragen von Signalen bzw. Nachrichten an die Telekommunikationsgeräte durch das sogenannte HLR (home location register: Heimatdatei) erfolgen. Es ist auch möglich, dass das Telekommunikationsnetzwerk eine Mehrzahl von Unternetzwerken aufweist, bei dem eines als ein Festtelefonnetzwerk und das andere als ein Mobiltelefonnetzwerk ausgebildet ist.

Des Weiteren wird eine Telekommunikationsanordnung geschaffen, welche ein erstes und ein zweites Telekommunikationsgerät sowie ein Telekommunikationsnetzwerk umfasst. Dabei ist die Telekommunikations anordnung dafür ausgeleg ein oben beschriebens Verfahren durch zuführen.t

Kennzeichen eines Verfahrens zum Aufbauen einer Kommunikationsverbindung von einem ersten Telekommunikationsgerät über ein Telekommunikationsnetzwerk zu einem zweiten Telekommunikationsgerät gemäß der Erfindung ist es, dass nun auf bzw. in dem zweiten Telekommunikationsgerät zumindest ein Multimedia-Objekt (mit Bild, Toninformation, usw.) zusammen mit einer jeweiligen Referenznummer gespeichert ist. Das bedeutet, es kann beispielsweise in einem sogenannten elektronischen Telefonbuch zu einem oder mehreren Telekommunikationsteilnehmern ein Multimedia-Objekt, insbesondere ein Bild vorgesehen sein. Es ist auch möglich, dass einem Telekommunikationsteilnehmer mehrere Multimedia-Objekte zugeordnet sind.

Um seitens des Anrufers wiederum zu gewährleisten, dass bei einem bestimmten Rufempfänger beim Verbindungsaufbau ein bestimmtes vom Anrufer gewünschtes Multimedia-Objekt abgespielt wird, wird ferner eine Zuordnungsabbildung bzw. Zuordnungstabelle mit zumindest einem Datensatz festgelegt, welcher die Zuordnung von einem bestimmten Rufempfänger zu einer bestimmten Referenznummer eines Multimedia-Objekts angibt. Nun wird vom Anrufer, in diesem Fall von einem dem ersten Telekommunikationsgerät zugeordneten ersten Telekommunikationsteilnehmer ein gewünschter Rufempfänger ausgewählt. Um zu diesem eine Kommunikationsverbindung aufzubauen und diesem die Identität des Anrufers beispielsweise durch ein Bild anzuzeigen, sind folgende Schritte durchzuführen. Es wird eine Verbindungsaufbauaufforderung von dem ersten Telekommunikationsgerät an das Telekommunikationsnetzwerk gesendet, wobei die Verbindungsaufbauaufforderung angibt, dass eine Kommunikationsverbindung, insbesondere eine Telefonverbindung, von dem ersten Telekommunikationsgerät zu dem zweiten Telekommunikationsgerät, welches dem ausgewählten Rufempfänger zugeordnet ist, aufgebaut werden soll. Ferner wird für den ausgewählten Rufempfänger anhand der Zuordnungsabbildung die für diesen bestimmte Referenznummer eines an diesen zu übertragenden und bei diesem abzuspielenden Multimedia-Objekts ermittelt. Die beiden Schritte des Sendens einer Verbindungsaufbauaufforderung und des Ermittelns der Referenznummer sind dabei je nach Ausgestaltung in unterschiedlicher zeitlicher Abfolge durchzuführen, wie es unten noch näher erläutert werden wird.

Ist einmal eine Referenznummer für ein zu übertragendes Multimedia-Objekt ermittelt, so wird eine Rufsignalisierung an das zweite Telekommunikationsgerät zusammen mit einer Anzeigeinformation übertragen. Dabei umfasst die Anzeigeinformation die ermittelte Referenznummer oder ist von dieser abhängig. Insbesondere ist es möglich, dass die Referenznummer in kodierter Form in der Anzeigeinformation enthalten ist. Unter Verwendung der nun auf das zweite Telekommunikationsgerät übertragenen Referenznummer eines Multimedia-Objekts wird dieses Multimedia-Objekt von dem zweiten Telekommunikationsgerät abgespielt, d. h. insbesondere ein Bild des Anrufers angezeigt.

Somit wird gemäß der Erfindung ein Verfahren mit mehreren Vorteilen geschaffen. Der Anrufer hat zum Einen die Kontrolle über das beim Rufempfänger abzuspielende Multimedia-Objekt, es wird ferner der Datenübertragungsaufwand vom ersten Telekommunikationsgerät zum Telekommunikationsnetzwerk, aber auch vom Telekommunikationsnetzwerk zum zweiten Telekommunikationsgerät auf ein Minimum reduziert, da jeweils lediglich Referenzinformationen bzw. eine Referenznummer für ein anzuzeigendes Bild übertragen werden müssen und nicht das vollständige Multimedia-Objekt.

Gemäß einer vorteilhaften Ausgestaltung wird die Zuordnungsabbildung in dem ersten Telekommunikationsgerät vorgesehen, wobei in diesem Fall nach dem Ermitteln der Referenznummer eines Multimedia-Objekts für den ausgewählten Rufempfänger in dem ersten Telekommunikationsgerät von diesem (dem ersten Telekommunikationsgerät) die ermittelte Referenznummer an das Telekommunikationsnetzwerk übertragen wird, das dann die der ermittelten Referenznummer entsprechende Anzeigeinformation an das zweite Telekommunikationsgerät überträgt.

Gemäß einer weiteren vorteilhaften Ausgestaltung wird die Zuordnungsabbildung beispielsweise in Form einer Liste oder Tabelle in dem Telekommunikationsnetzwerk gespeichert. In diesem Fall findet der Schritt des Ermittelns der Referenznummer schließlich in dem Telekommunikationsnetzwerk statt, so dass zum Einen der Speicherbedarf als auch der Rechenaufwand im ersten Telekommunikationsgerät verringert sind.

Damit ein Anrufer in der Lage ist, jedem beliebigen Rufempfänger, auch einem, welcher nicht in der Zuordnungsabbildung in einem Datensatz vorliegt, ein ihm zugeordnetes bestimmtes Multimedia-Objekt zukommen zu lassen, wird für derartige Rufempfänger, welche nicht in der Zuordnungsabbildung vorgesehen sind, ein standardmäßiges Multimedia-Objekt definiert. Das kann beispielsweise derart realisiert werden, dass der Schritt des Ermittelns vorsieht, dass bei Vorliegen eines ausgewählten Rufempfängers, für den kein Datensatz in der Zuordnungsabbildung vorliegt, eine Referenznummer eines vorbestimmten Multimedia-Objekts als Standardreferenznummer ausgegeben wird.

Gemäß der Erfindung sind ferner im Telekommunikationsnetzwerk eine Mehrzahl von Multimedia-Objekten von Telekommunikationsteilnehmern zusammen mit einer jeweiligen Referenznummer gespeichert. Insbesondere sind dabei Multimedia-Objekte in dem Telekommunikationsnetzwerk gespeichert, die dem ersten Telekommunikationsteilnehmer zugeordnet sind. Das Vorsehen von Multimedia-Objekten, insbesondere Bildern, von Telekommunikationsteilnehmern im Telekommunikationsnetz kann dabei insbesondere vorteilhaft sein, wenn gewährleistet werden soll, dass in dem zweiten Telekommunikationsgerät immer die aktuellen Multimedia-Objekte (des ersten Telekommunikationsteilnehmers) abgespielt werden. Zu diesem Zweck kann nach Übertragen der Anzeigeinformation auf das zweite Telekommunikationsgerät ein Schritt des Vergleichens der übertragenen Anzeigeinformation mit einer Referenznummer eines dem ersten Telekommunikationsteilnehmer zugeordneten und in dem zweiten Telekommunikationsgerät gespeicherten Multimedia-Objekts durchgeführt werden, wobei bei einem negativen Vergleich der Anzeigeinformation mit der Referenznummer, d. h. wenn keine Übereinstimmung vorliegt, eine Aktualisierungsaufforderungsnachricht an das Telekommunikationsnetzwerk zurückgesendet wird, welche angibt, dass das Telekommunikationsnetzwerk ein der Anzeigeinformation entsprechendes Multimedia-Objekt an das zweite Telekommunikationsgerät übertragen soll. Anschließend kann dann das Telekommunikationsnetzwerk ansprechend auf die Aktualisierungsaufforderungsnachricht ein der Anzeigeinformation entsprechendes Multimedia-Objekt an das zweite Telekommunikationsgerät übertragen.

Gemäß einer weiteren vorteilhaften Ausgestaltung weist ein Multimedia-Objekt eines Telekommunikationsteilnehmers, das im Netzwerk gespeichert ist, zusätzlich zur Referenznummer eine weitere Referenzinformation umfassend eine Speicherberechtigungsangabe auf, welche angibt, ob ein an das zweite Telekommunikationsgerät übertragenes Multimedia-Objekt eines Telekommunikationsteilnehmers (insbesondere des ersten Telekommunikationsteilnehmers) dort gespeichert werden darf, oder nicht. Eine derartige Speicherberechtigungsangabe kann sinnvoll sein, um einer ungewollten Bearbeitung des Multimedia-Objekts entgegenzuwirken. Insbesondere bei der Übertragung eines Firmenlogos innerhalb eines Multimedia-Objekts kann somit ein Missbrauch des Logos verhindert werden.

Gemäß einer vorteilhaften Ausgestaltung können das erste und/oder das zweite Telekommunikationsgerät als ein Mobilfunkgerät, ein Mobiltelefon, ein Computer mit Funkmodul, oder als ein drahtgebundenes Telefon ausgebildet sein. Außerdem kann das Telekommunikationsnetzwerk als ein öffentliches Festtelefonnetzwerk oder als ein Mobilfunknetzwerk, welches insbesondere nach dem GSM- oder dem UMTS-Standard arbeitet, ausgebildet sein. Dabei kann bei Ausbildung des Telekommunikationsnetzwerks als Mobilfunknetzwerk die Speicherung der Zuordnungsabbildung oder von Multimedia-Objekten, oder aber auch das Verarbeiten von Signalen bzw. Nachrichten von den Telekommunikationsgeräten sowie das Übertragen von Signalen bzw. Nachrichten an die Telekommunikationsgeräte durch das sogenannte HLR (home location register: Heimatdatei) erfolgen.

Ferner wird eine Telekommunikationsanordnung geschaffen, welche ein erstes und ein zweites Telekommunikationsgerät sowie ein Telekommunikationsnetzwerk umfasst. Die Telekommunikationsanordnung ist angepasst ein Verfahren gemäß der Erfindung durchzuführen.

Ausgehend von dem Fall, bei dem eine Telefonverbindung von dem ersten Telekommunikationsgerät zu dem zweiten Telekommunikationsgerät aufgebaut werden soll, und bei dem im zweiten Telekommunikationsgerät Multimedia-Objekte von Telekommunikationsteilnehmern gespeichert sind, kann das Senden einer Verbindungsaufbauaufforderung im Rahmen einer Rufnummerübermittlung geschehen. Genauer gesagt wird, damit der Anrufer (erster Telekommunikationsteilnehmer) bei einem Rufempfänger (zweiter Telekommunikationsteilnehmer) beim Verbindungsaufbau das Abspielen eines bestimmten Multimedia-Objekts bzw. das Anzeigen eines bestimmten Bildes erreichen kann, die Rufnummer des Anrufers mit einem bestimmten Steuercode (für das abzuspielende Multimedia-Objekt) vom ersten Telekommunikationsgerät zum Telekommunikationsnetzwerk übertragen, das dann den empfangenen Steuercode empfängt und weiter verarbeitet. Dabei erfolgt die Verarbeitung beispielsweise anhand der Zuordnungsabbildung, wobei der an das zweite Telekommunikationsgerät zu übertragenden Rufnummer des Anrufers ein weiterer Steuercode bzw. eine Anzeige oder Abspielinformation zur Steuerung des abzuspielenden Multimedia-Objekts beim zweiten Telekommunikationsgerät angehängt wird. Ist das zweite Telekommunikationsgerät in der Lage, die empfangene Anzeigeinformation bzw. Abspielinformation zu detektieren und auszuwerten, so kann dann das vom Anrufer gewünschte Multimedia-Objekt abgespielt werden. Ist jedoch das zweite Telekommunikationsgerät nicht in der Lage, die um die Anzeigeinformation erweiterte Rufnummer zu interpretieren, so wird einfach die übertragene Rufnummer mitsamt der (nicht interpretierbaren) Steuercodes beispielsweise auf einer Anzeige des zweiten Telekommunikationsgeräts angezeigt. Das Wesentliche bei einer derartigen Signalisierung liegt in der Codierung der Verbindungsaufbauaufforderung bzw. Anrufsignalisierung durch rückwärts kompatible Steuercodes in der Rufnummerübermittlung und in der Funktionalität des (empfangenden) zweiten Telekommunikationsgeräts, die zur übermittelten Rufnummer im zweiten Telekommunikationsgerät hinterlegten Einträge für Multimedia-Objekte entsprechend auszuwählen und auszugeben.

Bevorzugte Beispiele werden nachfolgend Bezug nehmend auf die beiliegenden Zeichnungen näher erläutert. Es zeigen:
- Figur 1: eine Möglichkeit der Zuordnung von Bildern zu einem Telekommunikationsteilnehmer;
- Figur 2: drei beispielhafte Multimedia-Objekte, die einem (ersten) Telekommunikationsteilnehmer zugeordnet sind und entweder in einem Telekommunikationsnetzwerk oder in einem (zweiten) Telekommunikationsgerät speicherbar sind;
- Figur 3: eine Zuordnungsabbildung bzw. eine Liste für einen Telekommunikationsteilnehmer, in der bestimmten als Rufempfänger eingetragenen weiteren Telekommunikationsteilnehmern bestimmte Referenznummern zugewiesen sind, die auf Multimedia-Objekte, wie Bilder hinweisen, welche der Rufempfänger beim Verbindungsaufbau abzuspielen bzw. anzuzeigen hat;
- Figur 4: eine Telekommunikationsanordnung zur Erläuterung des Aufbaus einer Kommunikationsverbindung, insbesondere Telefonverbindung von einem ersten Telekommunikationsgerät zu einem zweiten Telekommunikationsgerät;
- Figur 5: eine Telekommunikationsanordnung zur Erläuterung des Aufbaus einer Kommunikationsverbindung, insbesondere Telefonverbindung von einem ersten Telekommunikationsgerät zu einem zweiten Telekommunikationsgerät gemäß der Erfindung.

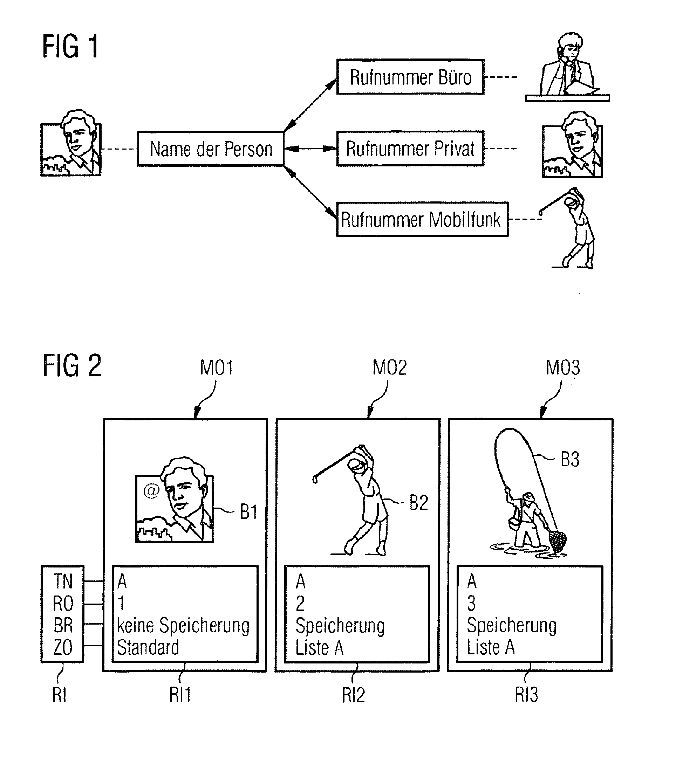

Es sei nun auf Figur 1 verwiesen, in der zwei verschiedene Möglichkeiten zur Zuordnung eins Multimedia-Objekts, wie eines Bildes zu einem Benutzer dargestellt sind. So ist es beispielsweise möglich, dass (wie auf der linken Seite gezeigt) einem Telekommunikationsteilnehmer als Anrufer ein bestimmtes Multimedia-Objekt zugeordnet ist, das bei einem Rufempfänger beim Aufbau einer Telekommunikationsverbindung (insbesondere vor dem Aufbau einer Sprachverbindung in der Telefonie) abgespielt und im Fall eines Bildes angezeigt werden soll.

Es ist jedoch auch möglich, dass das Abspielen bzw. Anzeigen eines Multimedia-Objekts bei einem Rufempfänger während der Verbindungsaufbausignalisierung auch differenzierte gehandhabt werden kann. Somit ist es möglich, dass (wie auf der rechten Seite der Abbildung gezeigt) für einen Kommunikationsteilnehmer ein unterschiedliches Multimedia-Objekt abgespielt bzw. angezeigt wird, je nachdem, von welcher Telefonnummer der Telekommunikationsteilnehmer bzw. der Anrufer anruft. Auf der anderen Seite ist es auch denkbar, dass ein Rufempfänger verschiedene Telefonnummern aufweisen kann, wobei jeder Telefonnummer ein bestimmtes Multimedia-Objekt des Anrufers zugewiesen ist, das bei einem Verbindungsaufbau abgespielt bzw. angezeigt wird.

Der Einfachheit halber wird bei der folgenden Erläuterung gemäß den Figuren 2 bis 5 davon ausgegangen, dass einem bestimmten Rufempfänger ein bestimmtes Multimedia-Objekt zugeordnet sein soll. Natürlich kann, wie bereits erwähnt, auch jeder Rufnummer des Rufempfängers ein (unterschiedliches) Multimedia-Objekt zugeordnet werden, das dann beim Rufempfänger während des Verbindungsaufbaus abgespielt wird.

Ferner soll klargestellt werden, dass im Folgenden aus Gründen der einfachen Darstellung an Stelle eines einem Anrufer zugeordneten Multimedia-Objekts lediglich von einem dem Anrufer bzw. Telekommunikationsteilnehmer zugeordnetem Bild gesprochen wird, welches beim Rufempfänger beim Verbindungsaufbau angezeigt werden soll. Selbstverständlich kann in einem Multimedia-Objekt nicht nur ein Bild, sondern auch Toninformationen, wie beispielsweise Klingeltöne oder andere multimediale Inhalte vorgesehen sein.

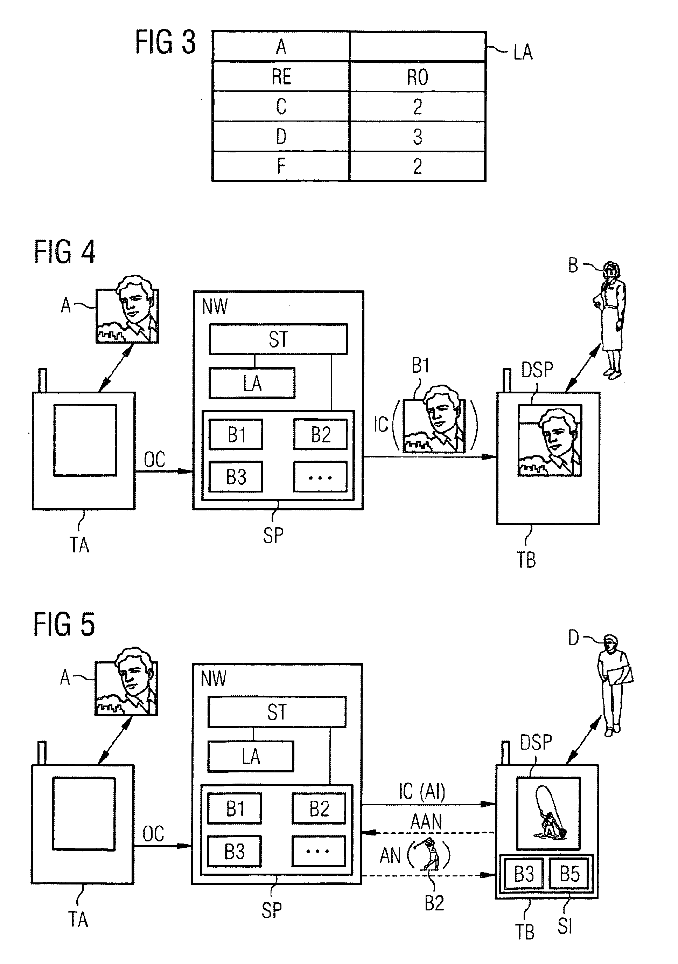

Beispiele für Multimedia-Objekte von Telekommunikationsteilnehmern (im Folgenden kurz als Teilnehmer bezeichnet), welche in einem Telekommunikationsnetzwerk gespeichert werden können, sind in Figur 2 zu sehen. Dabei können für einen Teilnehmer A im Netzwerk drei Multimedia-Objekt MO1, M02 und M03 gespeichert sein. Das erste Multimedia-Objekt MO1 umfasst ein Bild B1, das zweite Multimedia-Objekt M02 umfasst ein Bild B2 und das dritte Multimedia-Objekt M03 umfasst das Bild B3. Ferner sind den drei Multimedia-Objekten noch sogenannte Referenzinformationen RI zugeordnet. Die Referenzinformationen umfassen dabei den Teilnehmer TN, dem die Multimedia-Objekte zugewiesen sind, eine Referenznummer RO, eine Speicherberechtigungsangabe BR, welche angibt, ob ein an einen Rufempfänger übertragenes Multimedia-Objekt auf dem Telekommunikationsgerät des Rufempfängers gespeichert werden darf oder nicht, und eine Zuordnungsangabe ZO, welche angibt, für welche Gruppen bzw. ausgewählte Gruppen von Rufempfängern das jeweilige Multimedia-Objekt bzw. Bild zur Anzeige verwendet werden soll. Genauer gesagt sind dabei dem ersten Multimedia-Objekt MO1 die Referenzinformationen RI1 zugeordnet, welche angeben, dass das Multimedia-Objekt MO1 dem Teilnehmer A zugewiesen ist, dass es die Referenznummer 1 hat, dass (bezüglich der Speicherberechtigung) das Multimedia-Objekt MO1 bzw. das Bild B1 nicht lokal auf einem Telekommunikationsgerät eines Rufempfängers gespeichert werden darf, und dass das Multimedia-Objekt MO1 bzw. das Bild B1 als Standard zu verwenden sind, für Rufempfänger, welche nicht auf einer besonderen Liste des Teilnehmers A (vergleiche Figur 3) angegeben sind. Dem zweiten Multimedia-Objekt M02 sind Referenzinformationen RI2 zugeordnet, welche angeben, dass das Multimedia-Objekt M02 dem Teilnehmer A zugeordnet ist, dass das Multimedia-Objekt M02 die Referenznummer 2 hat, dass eine Speicherung des Multimedia-Objekts auf einem Telekommunikationsgerät eines Rufempfängers erlaubt wird, und dass das Bild einer speziellen Liste von Rufempfängern des Teilnehmers A (vergleiche wieder Figur 3) zugeordnet ist. Schließlich sind dem dritten Multimedia-Objekt M03 Referenzinformationen RI3 zugeordnet, welche angeben, dass das Multimedia-Objekt M03 dem Teilnehmer A zugewiesen ist, dass das Multimedia-Objekt M03 die Referenznummer 3 erhält, dass eine lokale Speicherung auf einem Telekommunikationsgerät des Rufempfängers erlaubt ist, und dass das Multimedia-Objekt M03 zu einer Zuordnungsliste des Teilnehmers A (vergleiche wiederum Figur 3) gehört.

Es sei nun auf Figur 3 verwiesen, in der eine Zuordnungsabbildung bzw. Liste LA dargestellt ist, welche einem Teilnehmer A zugeordnet ist. Eine derartige Liste kann beispielsweise, wie es noch zu den Figuren 4 und 5 erläutert werden wird, in einem Telekommunikationsnetzwerk gespeichert sein. Dabei umfasst die linke Spalte mit der Überschrift RE eine Aufzählung von Teilnehmern als Rufempfänger, welchen in der Spalte RO bestimmte Referenznummern für Multimedia-Objekte bzw. Bilder zugeordnet sind, welche bei einem entsprechenden Rufempfänger beim Verbindungsaufbau abgespielt bzw. angezeigt werden sollen.

Es sei nun auf Figur 4 verwiesen, in der eine Telekommunikationsanordnung zum Durchführen eines Verfahrens zum Aufbau einer Kommunikationsverbindung bzw. Telefonverbindung gezeigt ist. Die Telekommunikationsanordnung umfasst dabei ein erstes Telekommunikationsgerät TA, ein zweites Telekommunikationsgerät B sowie ein Telekommunikationsnetzwerk NW, das zur Vermittlung von Daten bzw. Informationen oder Nachrichten zwischen den Telekommunikationsgeräten TA und TB ausgelegt ist. Im vorliegenden Fall handelt es sich bei dem Telekommunikationsnetzwerk NW um ein Mobilfunknetzwerk, das über eine Luftschnittstelle mit als Mobiltelefone ausgelegte Telekommunikationsgeräte TA und TB in Verbindung steht. Sowohl die Mobiltelefone TA und TB als auch das Mobilkommunikationsnetzwerk MW können dabei gemäß dem GSM(Global System for Mobile Communication)-Standard, dem UMTS(Universal Mobile Telecommunications System)-Standard oder einem anderen Mobilfunk-Standard arbeiten.

In dem Telekommunikationsnetzwerk NW befindet sich ein Speicherbereich SP (beispielsweise in dem HLR des Netzwerks), in dem Multimedia-Objekte von Telekommunikationsteilnehmern gespeichert sind, wobei, wie bereits erwähnt, der Einfachheit halber stellvertretend für ein Multimedia-Objekt die in diesem enthaltenen Bilder B1, B2 und B3 dargestellt sind. Ferner ist im Netzwerk eine Liste LA als Zuordnungsabbildung gespeichert, welche angibt, welches Bild mit einer bestimmten Referenznummer bei einem bestimmten Rufempfänger beim Verbindungsaufbau angezeigt werden soll. Eine Steuereinrichtung ST dient zur Verwaltung des Speichers SP und der LA, sowie zum Verarbeiten von Signalen bzw. Nachrichten von den Mobiltelefon TA und TB und zum Übertragen von Signalen bzw. Nachrichten an diese.

Es wird nun davon ausgegangen, dass in einem ersten Fall der dem ersten Mobiltelefon TA zugeordnete Teilnehmer A über das Telekommunikationsnetzwerk NW einen Teilnehmer B anrufen möchte. Dazu sendet der Teilnehmer A bzw. das Mobiltelefon TA eine Verbindungsaufbauaufforderung bzw. eine ausgehende Rufnachricht OC an das Telekommunikationsnetzwerk NW. In diesem wird dann geprüft, ob für den Teilnehmer A eine Zuordnungsabbildung bzw. Liste LA verfügbar ist, und wenn ja, ob der in der Verbindungsaufbauaufforderung enthaltene Rufempfänger (im vorliegenden Fall) B in der Liste LA (vgl. Figur 3) enthalten ist. Das Telekommunikationsnetzwerk erkennt nun für den Teilnehmer B, dass dieser nicht in der Liste LA enthalten ist und versucht dann ein Standardbild zu ermitteln, das Teilnehmern bzw. Rufempfängern übermittelt wird, welche nicht in der Liste LA enthalten sind. Wie bereits in Figur 2 erwähnt, ist das Multimedia-Objekt MO1 bzw. das Bild B1 als Standard definiert, und soll für beliebige Rufempfänger, welche nicht in der Liste LA enthalten sind, verwendet werden. Da das Bild B1 mit dem Teilnehmer A in geschäftlichem Zusammenhang steht, wobei das Firmenlogo (hier das "@"-Symbol) enthalten ist, soll der Rufempfänger, nämlich der Teilnehmer B, zur Vermeidung des Missbrauchs des Firmenlogos keine Erlaubnis haben, das Bild B1 auf seinem Mobiltelefon TB zu speichern. Hierzu wurde bereits bezüglich Figur 2 erwähnt, dass in den Referenzinformationen RI1 zu dem Bild B1 die Speicherberechtigungsangabe entsprechend ausgeführt ist. Hat nun das Telekommunikationsnetzwerk NW das Bild B1 als das Standardbild ermittelt, so wird dieses Bild im Rahmen einer Rufsignalisierung bzw. einer eingehenden Rufnachricht IC an das Mobiltelefon TB übermittelt. Dieses Bild B1 wird dann auf einer Anzeigeeinrichtung bzw. einem Display DSP dargestellt. Gewöhnlicher Weise wird eine derartige Rufsignalisierung (zu einem Zeitpunkt, bei dem noch nicht die eigentliche Verbeindung bzw. Sprachverbindung hergestellt ist) beim zweiten Mobiltelefon TB mit der Ausgabe einer Schall- bzw. Toninformation, einem sogenannten Klingelton, begleitet, damit der Teilnehmer B von der Rufanfrage des Teilnehmers A in Kenntnis gesetzt wird. Dabei kann entweder eine bereits im Mobiltelefon TB gespeicherte Tonfolge abgespielt werden oder es kann auch eine entsprechende Toninformation bzw. eine Klingeltoninformation mit dem Bild B1 zum Mobiltelefon TB mitgesendet werden. Ein derartiges Mitsenden von Klingeltönen hat dabei den Vorteil, dass die Anfrage zum Verbindungsaufbau seitens des Teilnehmers A als individuelle Anfrage auch schon akustisch von Teilnehmer B wahrgenommen werden kann. Während nun der Teilnehmer B über die Anfrage zum Verbindungsaufbau seitens des Teilnehmers A informiert wird, kann er das Bild des Teilnehmers A betrachten und überlegen, ob er eine (bidirektionale) Sprachverbindung zum Teilnehmer A aufbauen möchte, indem er beispielsweise eine entsprechende Taste zum Annehmen des Rufs drückt.

Das vorliegende Verfahren zum Aufbau eines Rufs bzw. einer Kommunikationsverbindung hat somit den Vorteil, dass der Teilnehmer A als Anrufer bestimmen kann, welches Bild von ihm beim Teilnehmer B angezeigt werden soll. Ferner ist vorteilhaft, dass der Teilnehmer A durch einmaliges Festlegen einer Zuordnungsabbildung LA auch bei wiederholtem Anrufen des Teilnehmers B oder anderen Rufempfängern keine weiteren Mühen mit der Bildauswahl hat, da die Zuordnungsinformationen von demanzuzeigendem Bild und Rufempfänger als Zuordnungsabbildung bzw. Liste LA im Netzwerk abgelegt ist.

Es sei nun auf Figur 5 verwiesen, in der eine Telekommunikationsanordnung gemäß der Erfindung gezeigt ist. Diese Telekommunikationsanordnung entspricht im Wesentlichen der in Figur 4 gezeigten Telekommunikationsanordnung, wobei Kennzeichen nun ist, dass in dem zweiten Mobiltelefon TB Bilder B3 und B5 von Teilnehmern gespeichert sind, wobei diesen Bildern wieder eine bestimmte Referenznummer zugewiesen ist.

Es soll nun wieder ein Aufbau einer Kommunikationsverbindung bzw. Telefonverbindung von dem Teilnehmer A zu einem Teilnehmer D über das Telekommunikationsnetzwerk NW erfolgen. Dazu sendet das dem Teilnehmer A zugeordnete Mobiltelefon TA eine Verbindungsaufbauaufforderung bzw. eine ausgehende Rufnachricht OC an das Telekommunikationsnetzwerk NW, in der angegeben ist, dass eine Verbindung zum Teilnehmer D aufgebaut werden soll. Die Steuereinrichtung ST verarbeitet nun die Verbindungsaufbauaufforderung OC und überprüft, ob der Teilnehmer D in der Liste LA (vgl. Figur 3) von ausgewählten Rufempfängern des Teilnehmers A enthalten ist. Bezüglich des Teilnehmers D stellt die Steuereinrichtung ST fest, dass der Teilnehmer D in der Liste LA enthalten ist, und dass bei diesem ein Bild mit der Referenznummer 3 angezeigt werden soll. Zur Verringerung der Datenübertragung über eine Luftschnittstelle von dem Telekommunikationsnetzwerk zu dem zweiten Mobiltelefon TB wird nun, da bei der Erfindung im Mobiltelefon TB Bilder von Teilnehmern gespeichert sind, nicht das Bild vom Telekommunikationsnetzwerk zum Mobiltelefon TB übertragen, sondern lediglich eine Referenz auf das Bild. Eine Referenz kann dabei sowohl die Information über den anrufenden Teilnehmer (Teilnehmer A) sowie die Nummer des diesem Teilnehmer zugeordneten Bildes (nämlich hier die Nummer 2) aufweisen. Erfolgt die Verwaltung von Bildern nur über das Telekommunikationsnetzwerk NW, so ist es möglich, dass dieses Netzwerk jedem Bild, das im Rahmen einer Rufsignalisierung gemäß der Erfindung erfolgt, eine eindeutige eventuell codierte Referenznummer zuordnet. In diesem Fall muss nicht explizit der Teilnehmer und eine diesem zugeordnete Referenznummer angegeben werden. Es reicht die eindeutige Referenznummer.

Die Referenznummer, in einer Form wie gerade erläutert, wird dann als Anzeigeinformation AI mittels einer Rufsignalisierung bzw. einer eingehenden Rufnachricht IC vom Telekommunikationsnetzwerk NW zum Mobiltelefon TB übertragen. Das Mobiltelefon TB überprüft dann, ob ein der Anzeigeinformation AI entsprechendes Bild in dem internen Speicher SI des Mobiltelefons gespeichert ist. Im ersten Fall wird nun angenommen, dass das Bild zur Anzeigeinformation AI gespeichert ist, wobei es dann auf der Anzeigeeinrichtung DSP des Mobiltelefons angezeigt wird. Während der Signalisierung, dass der Teilnehmer A eine Verbindung zum Teilnehmer D aufbauen möchte, kann beim Mobiltelefon TB ferner eine akustische Information, insbesondere ein Klingelton bzw. Klingeltöne, ausgegeben werden. Neben dem akustischen Signal kann auch ein mechanisches Signal, beispielsweise in der Form einer Vibration vom Mobiltelefon TB abgegeben werden, um dem Teilnehmer D zu signalisieren, dass der Teilnehmer A eine Verbindung zu ihm aufbauen möchte. Der Teilnehmer D erkennt nun im Display das Bild des Teilnehmers A und kann sich entscheiden, ob er den Ruf des Teilnehmers A annehmen möchte und eine (bidirektionale) Sprachverbindung zum Teilnehmer A herstellen möchte. Ist dies der Fall, so wird er beispielsweise am Mobiltelefon TB eine entsprechende Rufannahmetaste (nicht dargestellt) drücken und somit das Gespräch annehmen.

Es soll nun ein zweiter Fall betrachtet werden, bei dem das der Anzeigeinformation AI entsprechende Bild nicht in dem Mobiltelefon TB gespeichert ist. Anders wie beim ersten Fall, bei dem die Anzeigeinformation AI eine Referenz auf das im Mobiltelefon TB gespeichert Bild B3 angegeben hat, wird nun angenommen, dass der Anrufer A möchte, dass beim Teilnehmer D ein Bild mit der Referenznummer 2 angezeigt wird. Entsprechend sei auch in diesem Fall die in Figur 3 dargestellte Liste LA derart abgeändert, dass dem Rufempfänger D die Referenznummer 2 zugeordnet wird. Das Bild mit der Referenz 2 sei dabei im Telekommunikationsnetzwerk NW gespeichert (vergleiche dazu auch Figur 2). Sendet nun der Teilnehmer A eine ausgehende Rufnachricht OC mit der Angabe, dass der Teilnehmer D gerufen werden soll, an das Telekommunikationsnetzwerk NW, so bestimmt die Steuereinrichtung ST anhand der Liste LA, dass nun dem Rufempfänger D ein Bild mit der Referenznummer 2 zugesendet werden soll, und generiert daraufhin eine Anzeigeinformation AI, die auf das Bild mit der Referenznummer 2 hinweist. Die Anzeigeinformation wird wie im Fall 1 mittels einer eingehenden Rufnachricht IC an das Mobiltelefon TB gesendet, das dann überprüft, ob ein Bild mit der Referenznummer 2 vorhanden ist. Im vorliegenden Fall ist jedoch auf dem Mobiltelefon TB kein Bild mit der Referenznummer 2 gespeichert, so dass das Mobiltelefon TB (durch einen gestrichelten Pfeil dargestellt) eine Aktualisierungsaufforderungsnachricht AAN an das Telekommunikationsnetzwerk NW zurücksendet, um anzuzeigen, dass kein Bild mit der Referenznummer 2 vorhanden ist, und dass das Telekommunikationsnetzwerk NW ein entsprechendes Bild (B2, vergleiche wiederum Figur 2) an das Mobiltelefon TB übertragen werden soll. In einer Aktualisierungsnachricht AN überträgt schließlich das Telekommunikationsnetzwerk ansprechend auf die Nachricht AAN das Bild B2 (wieder durch einen gestrichelten Pfeil dargestellt) an das Mobiltelefon TB. Dieses Bild kann dann auf dem Display DSP als Bild zur Signalisierung eines Verbindungsaufbaus angezeigt werden (nicht dargestellt in der Figur). Der Teilnehmer D kann sich nun entscheiden, ob er dem Ruf des Teilnehmers A annehmen möchte und eine Verbindung zu diesem aufbauen möchte. Dies sei nun im Folgenden geschehen. Wird die Verbindung zum Teilnehmer A beendet, so ist es möglich, dass das Mobiltelefon TB den Teilnehmer D fragt, ob das während des Aktualisierungsvorgangs übertragene Bild B2 nun lokal gespeichert werden soll oder ob es verworfen werden soll. Der Teilnehmer D kann nun die lokale Speicherung des Bildes bestätigen, worauf das Bild B2 einschließlich seiner Referenzinformationen, wie beispielsweise "Teilnehmer A, 2" gespeichert werden. Somit ist das Bild B2 auch ohne eine bestehende Verbindung zum Telekommunikationsnetzwerk bzw. zum ersten Mobiltelefon TA abrufbar, und kann beispielsweise im Rahmen eines elektronischen Terminkalenders bzw. Telefonbuchs auf dem Mobiltelefon TB verwendet werden. Versucht der Teilnehmer A erneut eine Verbindung zum Teilnehmer D herzustellen, so erfolgt nun wieder der gleiche Verfahrensablauf gemäß einem der beiden gerade dargestellten Fälle. Ist das passende Bild zur Anzeigeinformation AI bei der Rufsignalisierung im Mobiltelefon TB vorhanden, so wird der Verfahrensablauf gemäß Fall 1 abgearbeitet, während in dem Fall, bei dem das in der Anzeigeinformation AI referenzierte Bild nicht auf dem Mobiltelefon TB vorhanden ist, der Verfahrensablauf gemäß Fall 2 durchgeführt wird.

Möchte ein Teilnehmer A, dass ein weiteres Bild (neben den in Figur 2 dargestellten Bildern) von sich bei seinen Freunden bzw. Bekannten während des Aufbaus einer Verbindung angezeigt wird, so muss er zunächst das gewünschte Bild generieren bzw. bereitstellen. Ferner muss er, wie es in Figur 2 gezeigt ist, Referenzinformationen für das neue Bild bereitstellen und schließlich dieses Bild samt Referenzinformationen ans Telekommunikationsnetzwerk (beispielsweise durch eine E-Mail an den Netzwerkbetreiber) senden. Das neue Bild kann dann als Bild mit einer neuen eigenen Referenznummer im Netzwerk gespeichert sein, es kann jedoch auch unter einer bereits bestehenden Referenznummer im Telekommunikationsnetzwerk gespeichert werden, wobei es dann ein altes bereits bestehendes Bild ersetzt.

Im Folgenden soll nun kurz eine mögliche Rufsignalisierung im Rahmen einer Rufnummerübermittlung dargestellt werden. Es wird dabei wieder wie in dem in Figur 5 beschriebenen Fall davon ausgegangen, dass Multimedia-Objekte wie Bilder oder Klingeltondaten beispielsweise in einer Art Telefonbuch in dem Mobiltelefon eines Rufempfängers gespeichert sind. Die Signalisierung von einem rufenden Mobiltelefon zum Telekommunikationsnetzwerk (entsprechend der Verbindungsaufbauaufforderung OC) erfolgt beispielsweise mittels SS-Codes vor der angerufenen MSISDN bzw. "Mobile Subscriber ISDN" (zum Beispiel: *XX#04912345678). Die Signalisierung vom Telekommunikationsnetzwerk zum Mobiltelefon des Rufempfängers erfolgt (im Rahmen der Rufsignalisierung IC) entsprechend in der übermittelten Rufnummer (zum Beispiel: +49 987654321*3#4) für die MSISDN des anrufenden Teilnehmers, wobei ferner die Referenz für eine Klingeltondatei 3 und ein Bild 4 angehängt ist. Hat nun das Mobiltelefon des Rufempfängers in einem Telefonbuch (beispielsweise in der Form einer Tabelle) zu einer Rufnummer auch bestimmte Bilder und Klingeltondateien gespeichert, so kann das Mobiltelefon dann beim Verbindungsaufbau bzw. bei einer Rufsignalisierung von einem Anrufer anhand des Telefonbuchs die entsprechende Klingeltondatei und das Bild ermitteln und diese abspielen bzw. anzeigen. Ein Mobiltelefon (auf Seiten des Rufempfängers), das die Signalisierung in der Rufnummerübermittlung nicht unterstützt, zeigt dann beim Verbindungsaufbau lediglich die Steuercodes am Ende der übermittelten Anrufer-Rufnummer an. Da der Ablauf davon unberührt bleibt, ist diese Form der Signalisierung rückwärts kompatibel mit der ursprünglichen Rufnummerübermittlung.

## Patentansprüche

1. Verfahren zum Aufbauen einer Kommunikationsverbindung von einem ersten Telekommunikationsgerät (TA) über ein Telekommunikationsnetzwerkwerk (NW) zu einem zweiten Telekommunikationsgerät (TB), wobei das Verfahren die folgenden Schritte umfasst:
Speichern einer Mehrzahl von Multimedia-Objekten (MO1, M02, M03; B1, B2, B3), die einem ersten Telekommunikationsteilnehmer (A) zugeordnet sind, zusammen mit einer jeweiligen Referenznummer (RO) in dem Telekommunikationsnetzwerkwerk (NW);
Festlegen einer Zuordnungsabbildung (LA) für den ersten Telekommunikationsteilnehmer (A) mit zumindest einem Datensatz, welche die Zuordnung von einem bestimmten Rufempfänger (RE) zu einer bestimmten Referenznummer eines Multimedia-Objektes angibt;
Senden einer Verbindungsaufbauaufforderung (OC) von dem dem ersten Telekommunikationsteilnehmer zugeordneten ersten Telekommunikationsgerät an das Telekommunikationsnetzwerkwerk, die angibt, dass eine Kommunikationsverbindung von dem ersten Telekommunikationsgerät zu dem einem ausgewählten Rufempfänger zugeordneten zweiten Telekommunikationsgerät aufgebaut werden soll;
Ermitteln der für den ausgewählten Rufempfänger bestimmten Referenznummer anhand der Zuordnungsabbildung (LA);
Übertragen der ermittelten Referenznummer im Rahmen der Rufsignalisierung an das zweite Telekommunikationsgerät (TB);
Abspielen des unter der übertragenen Referenznummer auf dem zweiten Telekommunikationsgerät (TB) abgespeicherten Multimedia-Objektes (B1).

2. Verfahren nach Anspruch 1, bei dem zusätzlich das zweite Telekommunikationsgerät (TB) ein der übertragenen Referenznummer zugeordnetes Multimedia-Objekt (B1) von dem Telekommunikationsnetzwerk (NW) anfordert, wenn unter der Referenznummer kein Multimedia-Objekt (B1) im zweiten Telekommunikationsgerät (TB) abgespeichert ist.

3. Verfahren nach Anspruch 1 oder 2, bei dem die Zuordnungsabbildung (LA) in dem ersten Telekommunikationsgerät (TA) vorliegt, wobei nach dem Ermitteln der Referenznummer eines Multimedia-Objekts für einen ausgewählten Rufempfänger in dem ersten Telekommunikationsgerät (TA) von diesem die ermittelte Referenznummer an das Telekommunikationsnetzwerkwerk (NW) übertragen wird.

4. Verfahren nach Anspruch 1 oder 2, bei dem die Zuordnungsabbildung (LA) in dem Telekommunikationsnetzwerk gespeichert ist, so dass der Schritt des Ermittelns der Referenznummer in dem Telekommunikationsnetzwerk (NW) durchgeführt wird.

5. Verfahren nach einem der Ansprüche 1 bis 4, bei dem der Schritt des Ermittelns vorsieht, dass bei Vorliegen eines ausgewählten Rufempfängers, für den kein Datensatz in der Zuordnungsabbildung vorliegt, eine Referenznummer eines vorbestimmten Multimedia-Objektes (B1) ausgegeben wird.

6. Verfahren nach einem der Ansprüche 1 bis 5, bei dem ein Multimedia-Objekt des ersten Telekommunikationsteilnehmers ferner eine weitere Referenzinformation umfassend eine Speicherberechtigungsangabe (BR) aufweist, die angibt, ob ein an das zweite Telekommunikationsgerät übertragene Multimedia-Objekt des ersten Telekommunikationsteilnehmers dort gespeichert werden darf oder nicht.

7. Verfahren nach einem der Ansprüche 1 bis 6, bei dem ein Multimedia-Objekt (MO1, M02, MO3) ein Bild (B1, B2, B3) und/oder eine Toninformation aufweist.

8. Verfahren nach einem der Ansprüche 1 bis 7, bei dem das erste und/oder das zweite Telekommunikationsgerät (TA, TB) als ein Mobilfunkgerät, ein Mobiltelefon, ein Computer mit Funkmodul, oder als ein drahtgebundenes Telefon ausgebildet ist.

9. Verfahren nach einem der Ansprüche 1 bis 8, bei dem das Telekommunikationsnetzwerk (NW) als ein öffentliches Festtelefonnetzwerk oder als ein Mobilfunknetzwerk, das insbesondere nach dem GSM- oder UMTS-Standard arbeitet, ausgebildet ist.

10. Telekommunikationsanordnung umfassend ein erstes und ein zweites Telekommunikationsgerät (TA, TB) sowie ein Telekommunikationsnetzwerk (NW), wobei die Telekommunikationsanordnung angepasst ist ein Verfahren der Ansprüche 1 bis 9 durchzuführen.

## Claims

1. Method for setting up a communication link from a first telecommunication device (TA) over a telecommunication network (NW) to a second telecommunication device (TB), wherein the method comprises the following steps:
Storing a plurality of multimedia objects (MO1, M02, M03; B1, B2, B3), which are assigned to a first telecommunication subscriber (A) together with a relevant reference number (RO) in the telecommunication network (NW);
Defining an assignment mapping (LA) for the first telecommunication subscriber (A) with at least one data set which specifies the assignment of a specific call recipient (RE) to a specific reference number of a multimedia object;
Sending a connection setup request (OC) from the first telecommunication device assigned to the first telecommunication subscriber to the telecommunication network which specifies that a communication link from the first telecommunication device to the second telecommunication device assigned to a selected call recipient is to be set up;
Determining the reference number specified for the selected call recipient on the basis of the assignment mapping (LA);
Transmission of the reference number determined as part of the call signalling to the second telecommunication device (TB);
Playback of the multimedia object (B1) stored on the second telecommunication device (TB) under the transmitted reference number.

2. Method according to claim 1, in which in addition the second telecommunication device (TB) requests from the telecommunication network (NW) a multimedia object (B1) assigned to the transmitted reference number if no multimedia object (B1) is stored in the second telecommunication device (TB) under the reference number.

3. Method according to claim 1 or 2 in which the assignment mapping (LA) is present in the first telecommunication device (TA), wherein after the determination of the reference number of a multimedia object for a selected call recipient in the first telecommunication device (TA), the determined reference number is transmitted by said device to the telecommunication network (NW).

4. Method according to claim 1 or 2, in which the assignment mapping (LA) is stored in the telecommunication network (NW), so that the step of determining the reference number is carried out in the telecommunication network (NW).

5. Method according to one of the claims 1 to 4, in which the step of determining makes provision, if a selected call recipient is present for whom no data set is present in the assignment mapping, for a reference number of a predetermined multimedia object (B1) to be output.

6. Method according to one of the claims 1 to 5 in which a multimedia object of the first telecommunication subscriber also features further reference information comprising a storage authorization specification (BR) which specifies whether a multimedia object of the first telecommunication subscriber transferred to the second telecommunication device may be stored there or not.

7. Method according to one of the claims 1 to 6, in which a multimedia object (MO1, M02, M03) features a picture (B1, B2, B3) and/or tone information.

8. Method according to one of the claims 1 to 7, in which the first and/or the second telecommunication device (TA, TB) is embodied as a mobile radio device, a mobile telephone, a computer with radio module or as a landline telephone.

9. Method according to one of the claims 1 to 8, in which the telecommunication network (NW) is embodied as a public fixed line telephone network or as a mobile radio network, which especially operates in accordance with the GSM or UMTS standard.

10. Telecommunication arrangement comprising a first and a second telecommunication device (TA, TB) as well as a telecommunication network (NW), wherein the telecommunication arrangement is adapted to carry out a method of claims 1 to 9.

## Revendications

1. Procédé pour établir une liaison de communication d'un premier appareil de télécommunications (TA) vers un deuxième appareil de télécommunications (TB) via un réseau de télécommunications (NW), le procédé comportant les étapes suivantes :
- mise en mémoire d'une pluralité d'objets multimédia (MO1, M02, MO3 ; B1, B2, B3), qui sont associés à un premier abonné de télécommunications (A), avec un numéro de référence respectif (RO) dans le réseau de télécommunications (NW) ;
- détermination d'une application d'association (LA) pour le premier abonné de télécommunications (A) avec au moins un jeu de données, laquelle application indique l'association d'un destinataire d'appel déterminé (RE) à un numéro de référence déterminé d'un objet multimédia ;
- envoi, par le premier appareil de télécommunications associé au premier abonné de télécommunications au réseau de télécommunications, d'une invitation à établir une liaison (OC), laquelle indique qu'une liaison de communication doit être établie du premier appareil de télécommunications vers le deuxième appareil de télécommunications associé à un destinataire d'appel sélectionné ;
- détermination, à l'aide de l'application d'association (LA), du numéro de référence déterminé pour le destinataire d'appel sélectionné ;
- transmission du numéro de référence déterminé au deuxième appareil de télécommunications (TB) dans le cadre de la signalisation d'appel ;
- exécution de l'objet multimédia (B1) sauvegardé sur le deuxième appareil de télécommunications (TB) sous le numéro de référence transmis.

2. Procédé selon la revendication 1, selon lequel le deuxième appareil de télécommunications (TB) demande en outre au réseau de télécommunications (NW) un objet multimédia (B1) associé au numéro de référence transmis, lorsqu'aucun objet multimédia (B1) n'est sauvegardé sous le numéro de référence dans le deuxième appareil de télécommunications (TB).

3. Procédé selon la revendication 1 ou 2, selon lequel l'application d'association (LA) se trouve dans le premier appareil de télécommunications (TA), le numéro de référence d'un objet multimédia pour un destinataire d'appel sélectionné étant, après sa détermination dans le premier appareil de télécommunications (TA), transmis par celui-ci au réseau de télécommunications (NW).

4. Procédé selon la revendication 1 ou 2, selon lequel l'application d'association (LA) est stockée dans le réseau de télécommunications, de sorte que l'étape de détermination du numéro de référence est exécutée dans le réseau de télécommunications (NW).

5. Procédé selon l'une des revendications 1 à 4, selon lequel l'étape de détermination prévoit que, en présence d'un destinataire d'appel sélectionné pour lequel il n'y a pas de jeu de données dans l'application d'association, un numéro de référence d'un objet multimédia (B1) prédéterminé est émis.

6. Procédé selon l'une des revendications 1 à 5, selon lequel un objet multimédia du premier abonné de télécommunications comporte en outre une autre information de référence comprenant une indication d'autorisation de stockage (BR) qui indique si un objet multimédia du premier abonné de télécommunications transmis au deuxième appareil de télécommunications peut y être stocké ou non.

7. Procédé selon l'une des revendications 1 à 6, selon lequel un objet multimédia (MO1, M02, M03) comporte une image (B1, B2, B3) et/ou une information sonore.

8. Procédé selon l'une des revendications 1 à 7, selon lequel le premier et/ou le deuxième appareil de télécommunications (TA, TB) se présentent sous la forme d'un appareil radio mobile, d'un téléphone mobile, d'un ordinateur avec module radio ou d'un téléphone filaire.

9. Procédé selon l'une des revendications 1 à 8, selon lequel le réseau de télécommunications (NW) se présente sous la forme d'un réseau public de téléphonie fixe ou d'un réseau de téléphonie mobile qui fonctionne notamment selon la norme GSM ou la norme UMTS.

10. Dispositif de télécommunications, comprenant un premier et un deuxième appareil de télécommunications (TA, TB) ainsi qu'un réseau de télécommunications (NW), le dispositif de télécommunications étant adapté pour exécuter un procédé selon les revendications 1 à 9.
